# EUROPÄISCHE PATENTSCHRIFT

(11) **EP 2 046 870 B1**
(45) Veröffentlichungstag und Bekanntmachung des Hinweises auf die Patenterteilung: **30.04.2014**
(21) Anmeldenummer: 07725741.8
(22) Anmeldetag: 01.06.2007
(51) Int. Cl.: C08J 3/12

(54) **VERFAHREN ZUM HERSTELLEN EINES RIESELFÄHIGEN PULVERS EINES FLUORPOLYMER-COMPOUNDS UND NACH DEM VERFAHREN HERGESTELLTES RIESELFÄHIGES PULVER**
PROCESS FOR PREPARING A FREE-FLOWING POWDER OF A FLUOROPOLYMER COMPOUND AND FREE-FLOWING POWDER PREPARED BY THIS PROCESS
PROCÉDÉ DE FABRICATION D'UNE POUDRE FLUIDE D'UN COMPOSÉ DE FLUOROPOLYMÈRE ET POUDRE FLUIDE OBTENUE PAR LE PROCÉDÉ

(30) Priorität: 03.08.2006 DE 102006036203
(43) Veröffentlichungstag der Anmeldung: 15.04.2009
(73) Patentinhaber: ElringKlinger AG, 72581 Dettingen (DE)
(72) Erfinder: SCHLIPF, Michael, 89520 Heidenheim (DE); METZGER, Martin, 88316 Isny (DE)
(74) Vertreter: Hörner, Andreas
(86) Internationale Anmeldenummer: PCT/EP2007/004861
(87) Internationale Veröffentlichungsnummer: WO 2008/014840

(56) Entgegenhaltungen:
- EP-A1- 1 120 436
- EP-A1- 1 449 866
- US-A- 6 037 402
- US-A1- 2002 125 602
- ROY A ROBINSON: "Pelleting - The Uses Expand" COMPRESSED AIR, COMPRESSED AIR MAGAZINE CO. PHILLIPSBURG, US, Bd. 87, Nr. 11, November 1982 (1982-11), Seiten 34-37, XP002089271 ISSN: 0010-4426
- RUMPF H: "Grundlagen und Methoden des Granulierens" CHEMIE INGENIEUR TECHNIK, WILEY VCH. VERLAG, WEINHEIM, DE, Bd. 30, Nr. 5, Mai 1958 (1958-05), Seiten 329-336, XP002089272 ISSN: 0009-286X

## Beschreibung

Die vorliegende Erfindung betrifft ein Verfahren zum Herstellen eines rieselfähigen Pulvers eines Fluorpolymer-Compounds. Ferner betrifft die vorliegende Erfindung ein nach diesem Verfahren hergestelltes rieselfähiges Pulver eines Fluorpolymer-Compounds.

Fluorpolymer-Compounds werden hergestellt, indem feingemahlene Pulver aus einem Fluorpolymer, das nach dem Suspensions-Polymerisationsverfahren hergestellt worden ist, beispielsweise PTFE-Pulver aus S-PTFE, mit einer mittleren Korngröße von 5 µm bis 100 µm mit Füllstoffen versetzt und anschließend mit Mischern in eine homogene Pulvermischung überführt werden.

Die nach diesem Verfahren erhaltenen PTFE-Compounds weisen eine Pulverschüttdichte von 100 g/l bis 1.600 g/l auf. Diese PTFE-Compounds können wegen der schlechten Rieselfähigkeit nur manuell, beispielsweise unter Verwendung einer Schaufel, verarbeitet werden. Eine automatische Verarbeitung, insbesondere unter Verwendung von automatischen Befüll- oder Dosiereinrichtungen, ist damit nicht möglich.

Die Schüttdichte solcher nicht-rieselfähigen Compounds variiert in einem breiten Bereich und verändert sich unter äußerer Einwirkung, zum Beispiel durch Bewegung, Druck oder Rütteln sehr stark. Dadurch wird eine gleichmäßige Befüllung der Pressform mit anschließender homogener Verdichtung des Pulvers beim Verpressen erschwert. Inhomogene Materialeigenschaften im Endprodukt oder interne Spannungen nach dem Sintern können die Folge sein. Zudem können äußere Einwirkungen, wie beispielsweise Bewegung oder Rütteln, bei nicht-rieselfähigen Compounds die ursprünglich homogene Füllstoffverteilung wieder aufheben. Die so entstandenen lokalen Anreicherungen an Füllstoffen oder der PFTE-Pulver-Matrix können im Endprodukt zu inhomogenen Eigenschaften führen. Im Extremfall fehlt den Füllstoffanreicherungen die bindende Wirkung des PFTE, was zu Rissen führen kann. Andererseits steigt in den füllstoffarmen Regionen der PTFE-Pulver-Matrix das Abriebverhalten bei tribologischer Belastung stark an.

Aus der WO 98/41567 A1 und der WO 98/41568 A1 ist ein Verfahren zur Überführung von nicht-rieselfähigem PTFE-Pulver bzw. von nicht-rieselfähigem modifiziertem PTFE-Pulver in PTFE-Pulver mit guter Rieselfähigkeit bekannt. Bei diesem Verfahren werden, ausgehend von einem nicht-rieselfähigen Pulver, zum Granulieren stufenweise oder kontinuierlich arbeitende Reaktoren benutzt, in denen Wasser und ein mit Wasser nicht mischbares organisches Lösemittel sowie gegebenenfalls ein nichtionisches Tensid stark gerührt werden.

Die Anwendung eines solchen Verfahrens auf PTFE-Compounds ist in der WO 98/41569 A1 beschrieben.

Bei einem anderen Verfahren wird eine Trockenmischung aus PTFE-Pulver und Füllstoff mit einem Alkohol, vorzugsweise mit Isopropyl-Alkohol, versetzt. Diese Mischung wird anschließend zu einer knetbaren Masse homogenisiert, die mittels einer speziellen Siebmühle in eine Stäbchenform überführt und direkt zentrisch auf einen Vibrationsteller aufgebracht wird. Die spiralförmige Kontur des Vibrationstellers befördert das Produkt zum Außenrand des Tellers, wo es entnommen wird. Dabei bewirkt die Vibrationsbewegung, dass die ursprünglich stäbchenförmigen Partikel in ein Granulatkorn überführt werden. Nach einem anschließenden Trocknungsprozess, bei dem der Alkohol entfernt und das Agglomerat verfestigt wird, liegt das Produkt in einer rieselfähigen Agglomeratform vor.

Bei einem weiteren bekannten Verfahren wird ausgehend von einer Pulver-Trockenmischung ein Gemisch aus Wasser und einer grenzflächenaktiven Substanz, beispielsweise einem Tensid oder Glykol, verwendet, um ein rieselfähiges Agglomerat zu erhalten.

Die vorstehend genannten Granulierverfahren weisen jedoch zahlreiche Nachteile auf; so kann es insbesondere durch die Verwendung der Lösemittel zur Bildung von explosionsfähigen Gas/Luft-Gemischen kommen. Die verwendeten Lösemittel können gesundheitliche Probleme für die Mitarbeiter aufwerfen, insbesondere wenn es sich um toxische Lösemittel, beispielsweise Methylenchlorid, handelt. Das mittels dieser Verfahren hergestellte rieselfähige Produkt kann durch eingelagerte Reste von Tensiden kontaminiert sein. Zur Entfernung von Wasser, Lösemittel und/oder Tensid aus dem Produkt sind aufwendige Trocknungsprozesse erforderlich. Ferner sind die bekannten Granulierverfahren aufgrund der Vielzahl erforderlicher Prozessschritte häufig unwirtschaftlich.

Die EP-A1-1 449 866 und die US-A-6 037 402 offenbaren Nassgranulierungsverfahren zum Herstellen eines rieselfähigen Pulvers eines Fluorpolymer-Compounds, bei denen ein PTFE-haltiges Pulver in entionisiertes Wasser eingebracht wird, ein Tensid und eine organische Flüssigkeit zugesetzt werden, das Gemisch durchgerührt wird und anschließend das Granulat von der Flüssigkeit abgetrennt und getrocknet wird.

Roy A. Robinson: "Pelleting - The Uses Expand" Compressed Air, Compressed Air Magazine Co. Phillipsburg, US, Bd. 87, Nr. 11, November 1982 (1982-11), Seiten 34-37, XP002089271 ISSN: 0010-4426 offenbart Pelletierverfahren zum Herstellen von Pellets aus Amiden, Pottasche, Harnstoff, Zirkonium, Katalysatoren oder recycelten thermoplastischen Kunststoffen.

Rumpf H.: "Grundlagen und Methoden des Granulierens" Chemie Ingenieur Technik, Wiley VCH. Verlag, Weinheim, DE, Bd. 30, Nr. 5, Mai 1958 (1958-05), Seiten 329-336, XP002089272 ISSN: 0009-286X offenbart technische Granulierverfahren zum Herstellen von grobkörnigen Granulaten aus Metall, Kohlenstaub, Düngemitteln und anorganischen Chemikalien oder aus Futtermitteln.

Der vorliegenden Erfindung liegt die Aufgabe zugrunde, ein einfaches und wirtschaftliches Verfahren zum Herstellen eines rieselfähigen Pulvers eines Fluorpolymer-Compounds zu schaffen.

Diese Aufgabe wird durch ein Trockengranulierungsverfahren nach Anspruch 1 gelöst.

Dabei sind unter "Schülpen" stückige, bandförmige Zwischenprodukte zu verstehen, welche durch das Verpressen der Trockenmischung erzeugt werden.

Das erfindungsgemäße Verfahren ist ein trockenes Verfahren, d.h. eine Trockengranulierung des Fluorpolymer-Compounds ohne Zusatz von Lösemitteln bzw. Wasser/Tensid-Gemisch.

Damit entfallen bei dem erfindungsgemäßen Verfahren alle auf die Verwendung von Lösemitteln zurückzuführenden Nachteile der bekannten Granulierverfahren, insbesondere die damit verbundenen Emissionsprobleme und das Problem einer möglichen Kontamination des Endproduktes durch eingelagerte Reste von Lösemittelbestandteilen oder Zusatzstoffen.

Auch die Gefahr der Compound-Entmischung wird weitestgehend beseitigt.

Das erfindungsgemäße Trockengranulierverfahren ist besonders einfach aufgebaut und umfasst nur wenige Prozessschritte, weshalb es besonders wirtschaftlich durchführbar ist.

Das gemäß dem erfindungsgemäßen Verfahren erhaltene Pulver eines Fluorpolymer-Compounds weist eine gute Rieselfähigkeit auf und lässt sich durch automatische Vorrichtungen leicht in Maschinen zur Weiterverarbeitung dosieren.

Prinzipiell sind alle Maschinen, die typischerweise für die Pressverarbeitung von PTFE-Compounds eingesetzt werden, für die Weiterverarbeitung des erfindungsgemäß hergestellten Pulvers geeignet, also zum Beispiel: hydraulische Pressen, automatische und isostatische Pressen oder die Ramextrusion.

Insbesondere eignet sich das auf diese Weise hergestellte Pulver zur Verarbeitung mittels Ramextrusion.

Die elektrostatische Aufladbarkeit des rieselfähigen Pulvers kann im Vergleich zu der nicht rieselfähigen Trockenmischung vernachlässigt werden, weshalb auch das Risiko einer Kontamination des rieselfähigen Endprodukts sehr gering ist.

Die Trockenmischung enthält mindestens ein pulverförmiges Fluorpolymer-Material und mindestens einen pulverförmigen Füllstoff.

Bei einer bevorzugten Ausgestaltung des erfindungsgemäßen Verfahrens weist die Trockenmischung einen Füllstoffanteil von höchstens 60 Gewichtsprozent auf.

Grundsätzlich kommen als Füllstoffe alle organischen oder anorganischen Materialien in Betracht, welche als Füllstoff eines Fluorpolymer-Compounds verwendbar sind.

Vorzugsweise ist vorgesehen, dass die Trockenmischung als Füllstoff einen organischen Füllstoff, insbesondere PEEK, ein Polyimid, einen aromatischen Polyester, PPS und/oder PPSO2, und/oder einen anorganischen Füllstoff, insbesondere Glaspulver, Glasfasern, Bronze, Kohlenstoff, Graphit, SiO₂, Al₂O₃ und/oder MoS₂, und/oder eine Mischung aus mehreren organischen Füllstoffen, eine Mischung aus mehreren anorganischen Füllstoffen und/oder eine Mischung aus mindestens einem organischen Füllstoff und mindestens einem anorganischen Füllstoff enthält.

Die Trockenmischung enthält als Fluorpolymer-Material Polytetrafluorethylen (PTFE) oder modifiziertes Polytetrafluorethylen.

Beide PTFE-Typen werden durch Suspensions-Polymerisation hergestellt.

Unter einem "modifizierten Polytetrafluorethylen" ist dabei ein PTFE-ähnlicher Stoff zu verstehen, bei welchem die Molekülstruktur des PTFE dadurch chemisch modifiziert worden ist, dass neben TFE noch ein weiteres, ebenfalls perfluoriertes Monomer in die Molekülkette eingebaut wurde, so dass die Fluoratome des PTFE teilweise durch Substituenten ersetzt sind.

Die chemische Zusammensetzung und Herstellung von "modifiziertem PTFE" sind beispielsweise in der EP 0 041 687 A1, der EP 0 931 798 A1 oder der US-Patentschrift Nr. 6,013,700 beschrieben.

Das als Bestandteil der Trockenmischung verwendete PTFE oder modifizierte PTFE wird vorzugsweise als Suspensions-PTFE bzw. chemisch modifiziertes Supensions-PTFE in Rührreaktoren in Gegenwart von Wasser in Batch-Prozessen hergestellt, wobei nach der Polymerisation die wässrige Phase in mehreren Stufen abgetrennt und das erhaltene Suspensions-Rohpolymerisat getrocknet und gemahlen wird.

Die für das erfindungsgemäße Verfahren verwendete Trockenmischung weist vorzugsweise ein Schüttgewicht von 100 g/l bis 1.600 g/l auf.

Das mittels des erfindungsgemäßen Verfahrens hergestellte rieselfähige Pulver weist vorzugsweise ein Schüttgewicht von 400 g/l bis 2.500 g/l auf.

Besonders günstig ist es, wenn das rieselfähige Pulver ein höheres Schüttgewicht aufweist als die Trockenmischung, welche als Ausgangsmaterial verwendet wird.

Das Fluorpolymer-Material in der als Ausgangsmaterial verwendeten Trockenmischung weist vorzugsweise eine mittlere Korngröße d₅₀ von 5 µm bis 100 µm auf.

Das mittels des erfindungsgemäßen Verfahrens hergestellte rieselfähige Pulver weist vorzugsweise eine mittlere Korngröße d₅₀ von 300 µm bis 2.500 µm auf.

Besonders günstig ist es, wenn das rieselfähige Pulver eine höhere mittlere Korngröße d₅₀ aufweist als das Fluorpolymer-Material in der als Ausgangsmaterial verwendeten Trockenmischung.

Grundsätzlich ist es möglich, die Trockenmischung einfach aufgrund der Wirkung der Schwerkraft einer Verpressvorrichtung zuzuführen, in welcher die Trockenmischung zu Schülpen verpresst wird.

Bei einer bevorzugten Ausgestaltung des erfindungsgemäßen Verfahrens ist jedoch vorgesehen, dass die Trockenmischung mittels einer Schnecke zu einer solchen Verpressvorrichtung gefördert wird.

Wenn eine solche Verpressvorrichtung zwei einander gegenüberliegende Walzen aufweist, so reicht die Schnecke zur Förderung der Trockenmischung vorzugsweise bis in den Zwickelbereich zwischen den einander gegenüberliegenden Walzen hinein.

Die Schnecke weist vorzugsweise eine im wesentlichen vertikale Drehachse auf.

Ferner wird die Schnecke vorzugsweise mit einer Drehzahl von 10 U/min. bis 100 U/min. betrieben.

Die Schnecke kann eine längs der Förderrichtung der Schnecke abnehmende Steigung und/oder einen längs der Förderrichtung der Schnecke abnehmenden Durchmesser aufweisen.

Die Förderkammer, in welcher die Schnecke angeordnet ist, kann eine glatte Innenwand aufweisen.

Bei einer bevorzugten Ausgestaltung der Erfindung ist vorgesehen, dass die Schnecke in einer Förderkammer angeordnet ist, welche mindestens eine wendelförmig um die Förderrichtung der Schnecke verlaufende Nut aufweisen kann, um so die Vorschubwirkung der Schnecke zu unterstützen.

Bei dem erfindungsgemäßen Verfahren kann vorgesehen sein, dass die Trockenmischung vor dem Verpressen vorverdichtet wird, beispielsweise mittels einer die Trockenmischung zu der Verpressvorrichtung fördernden Schnecke.

Ferner kann vorgesehen sein, dass die Trockenmischung vor dem Verpressen zumindest teilweise entlüftet wird.

Bei einer bevorzugten Ausgestaltung des erfindungsgemäßen Verfahrens ist vorgesehen, dass die Trockenmischung mittels mindestens einer Walze, insbesondere mittels eines Walzenpaars, zu den Schülpen verpresst wird.

Die Walze bzw. die Walzen werden vorzugsweise mit einer spezifischen Anpresskraft von 1 kN/cm bis 10 kN/cm betrieben.

Ferner wird die Walze bzw. werden die Walzen mit einer Drehzahl von 5 U/min. bis 15 U/min. betrieben.

Die Walzen können mit einer glatten Walzenmantelfläche oder auch mit einer profilierten Walzenmantelfläche versehen sein.

Die Walzen oder zumindest die Walzenoberflächen können aus Metall, aus Thermoplast oder Duropolast und/oder aus einem Elastomer aufgebaut sein.

Die Verpressung der Trockenmischung zu den Schülpen erfolgt vorzugsweise so, dass die spezifische Dichte der durch Verpressen der Trockenmischung hergestellten Schülpen von 1,3 g/cm³ bis 4,0 g/cm³ beträgt.

Die durch das Verpressen der Trockenmischung hergestellten Schülpen werden vorzugsweise mittels einer Mühle zerkleinert.

Insbesondere kann hierfür eine Siebmühle verwendet werden.

Die Mühle wird vorzugsweise mit einer Drehzahl von 60 U/min. bis 400 U/min. betrieben.

Gegenstand von Anspruch 27 ist ein rieselfähiges Pulver eines Fluorpolymer-Compounds, das durch ein erfindungsgemäßes Verfahren hergestellt ist.

Dieses rieselfähige Pulver eignet sich insbesondere zur Herstellung von PTFE-Compound-Halbzeugen mittels Ramextrusion.

Bevorzugte Halbzeuge sind Stäbe, Rohre oder andere Extrudate mit einfachen Querschnitten.

Durch das erfindungsgemäße Trockengranulierungsverfahren können insbesondere die folgenden Vorteile erzielt werden:
Das Schüttgewicht der als Ausgangsmaterial verwendeten Trockenmischung im Bereich von 100 g/l bis 1.600 g/l wird auf das Schüttgewicht des rieselfähigen Pulvers im Bereich von 400 g/l bis 2.500 g/l erhöht.

Zugleich wird das Pulver im Hinblick auf das Schüttgewicht stabilisiert, so dass es ein im wesentlichen homogenes Schüttgewicht aufweist, was eine gleichmäßige Befüllung der Pressform mit anschließender homogener Verdichtung des rieselfähigen Pulvers beim Pressen im Zuge einer Weiterverarbeitung ermöglicht.

Ferner wird die Mischung aus Fluorpolymer-Material und Füllstoff gegen ein Entmischen stabilisiert.

An die Stelle der Korngrößenverteilung des gemahlenen Fluorpolymer-Pulvers in der Trockenmischung mit einer mittleren Korngröße von d₅₀ im Bereich von 5 µm bis 100 µm und des Füllstoffs tritt die Korngrößenverteilung des rieselfähigen Pulvers mit Agglomeraten mit einer mittleren Korngröße im Bereich von 400 µm bis 2.500 µm.

Die elektrostatische Aufladbarkeit wird durch das erfindungsgemäße Trockengranulationsverfahren reduziert, wodurch auch die Gefahr eines Schmutzeintrages und der Entmischung während der anschließenden Verarbeitung des rieselfähigen Pulvers reduziert wird.

Durch die automatische Weiterverarbeitbarkeit des durch das erfindungsgemäße Verfahren hergestellten rieselfähigen Pulvers wird die Wirtschaftlichkeit und Reproduzierbarkeit der anschließenden Weiterverarbeitung des Pulvers verbessert.

Die Erhöhung des Schüttgewichtes durch das erfindungsgemäße Verfahren, eine Folge des Granulierschrittes, steigert die Wirtschaftlichkeit insbesondere bei automatischer Pressverarbeitung und ermöglicht außerdem die Herstellung von Produkten mit größeren Abmessungen als dies bei nicht-rieselfähigen Pulvern und unter Verwendung der gleichen Pressformen möglich ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer Vorrichtung zum Herstellen eines rieselfähigen Pulvers eines Fluorpolymer-Compounds aus einer Trockenmischung;
- Fig. 2: einen schematischen Schnitt durch eine Verpressvorrichtung der Vorrichtung aus Fig. 1, welche ein Paar von Walzen umfasst, und eine die Trockenmischung zu der Verpressvorrichtung fördernde Schnecke;
- Fig. 3: einen schematischen Schnitt durch eine Siebmühle, welche mittels der Verpressvorrichtung aus Fig. 2 hergestellte Schülpen zu dem rieselfähigen Pulver zerkleinert;
- Fig. 4: eine teilweise geschnittene perspektivische Darstellung einer zylindrischen Förderkammer mit einer wendelförmigen Nut zur Unterstützung der Vorschubwirkung der Schnecke; und
- Fig. 5: eine Abwicklung der Umfangswand der Förderkammer aus Fig. 4.

Gleiche oder funktional äquivalente Elemente sind in allen Figuren mit denselben Bezugszeichen bezeichnet.

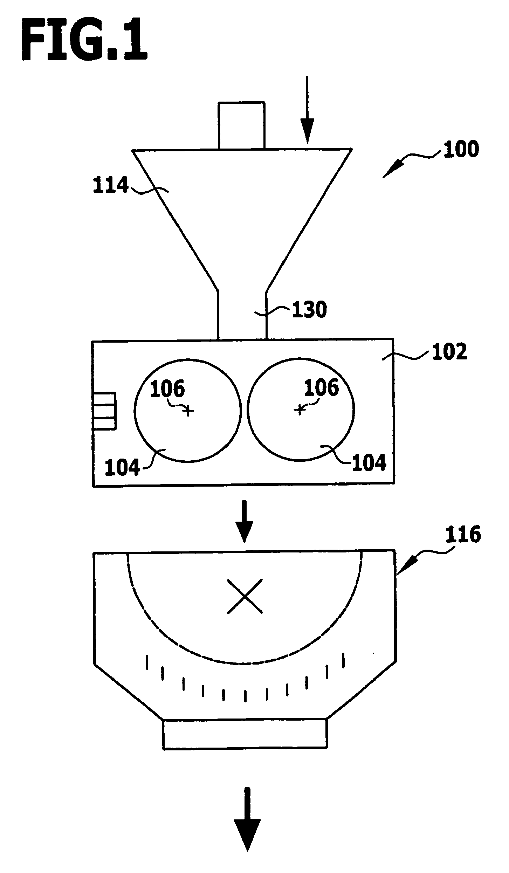

Eine in den Fig. 1 bis 5 dargestellte, als Ganzes mit 100 bezeichnete Vorrichtung zum Herstellen eines rieselfähigen Pulvers eines Fluorpolymer-Compounds aus einer Trockenmischung, welche mindestens ein Fluorpolymer-Material und mindestens einen Füllstoff enthält, umfasst eine Verpressvorrichtung 102 mit einem Paar von Walzen 104, welche um parallel zueinander ausgerichtete horizontale Drehachsen 106 drehbar gelagert und zu einer Drehbewegung um die Drehachsen 106 antreibbar sind.

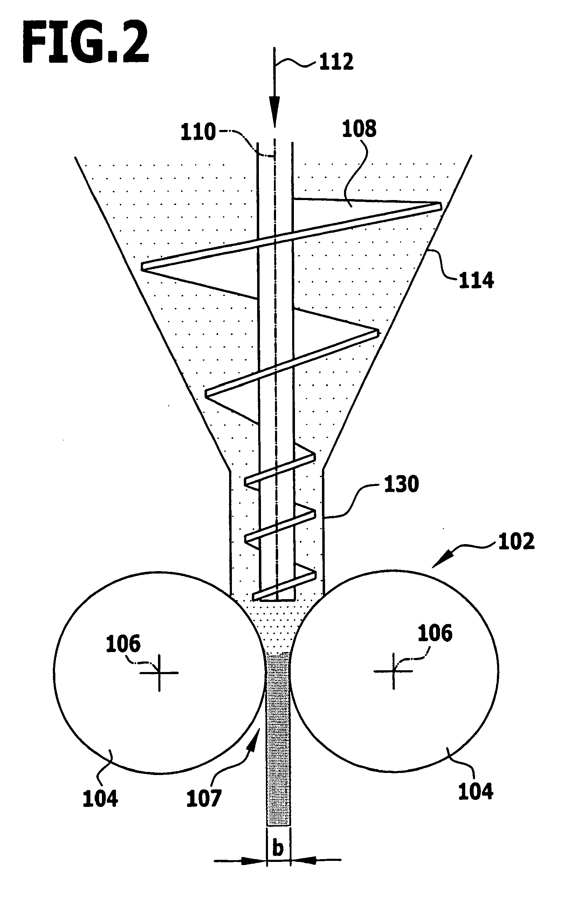

Zwischen den Mantelflächen der einander gegenüberliegenden Walzen 104 ist ein Walzenspalt 107 mit einer Spaltbreite b (siehe Fig. 2) von beispielsweise 1 cm und einer Spaltlänge I (Erstreckung senkrecht zur Zeichenebene der Fig. 2) von beispielsweise 5 cm ausgebildet, so dass die Querschnittsfläche des Walzenspalts beispielsweise 5 cm² beträgt.

Die beiden Walzen 104 drehen sich gegensinnig, mit gleicher Walzendrehzahl, wobei die Drehrichtung der Walzen so gerichtet ist, dass sich die Mantelflächen der Walzen an der Stelle des Walzenspaltes 107 nach unten bewegen.

Die mittels der Walzen 104 zu stückigen, bandförmigen Schülpen zu verpressende Trockenmischung wird dem Walzenspalt 107 mittels einer Schnecke 108 zugeführt, deren vertikale Drehachse 110 im wesentlichen mittig durch den Walzenspalt 107 verläuft.

Die Schnecke 108 weist eine längs der vertikal nach unten gerichteten Förderrichtung 112 abnehmende Steigung und einen längs der Förderrichtung 112 abnehmenden Durchmesser auf.

Die Schnecke 108 ist in einem sich nach unten verjüngenden Vorratstrichter 114 angeordnet, welcher an seinem unteren Ende in eine zylindrische Förderkammer 130 übergeht, die an den Mantelflächen der Walzen 104 endet.

Der Vorratstrichter 114 ist oben bis auf eine Einfüllöffnung geschlossen.

Ein an der Einfüllöffnung angeordnetes grobmaschiges Gitter verhindert ein unbeabsichtigtes Eingreifen einer Bedienungsperson in die Schnecke 108.

Durch das obere offene Ende des Vorratstrichters wird die zu verpressende Trockenmischung mittels einer Schaufel zugeführt und mittels der vertikal angeordneten Schnecke 108 dem Walzenspalt 107 zudosiert.

Der Schneckenschaft reicht dabei bis in den Zwickel zwischen den Mantelflächen der Walzen 104 hinein.

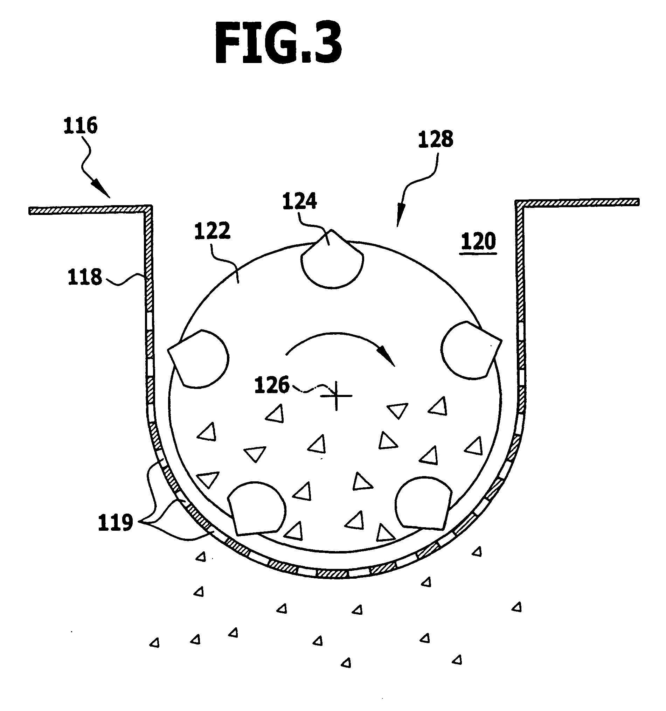

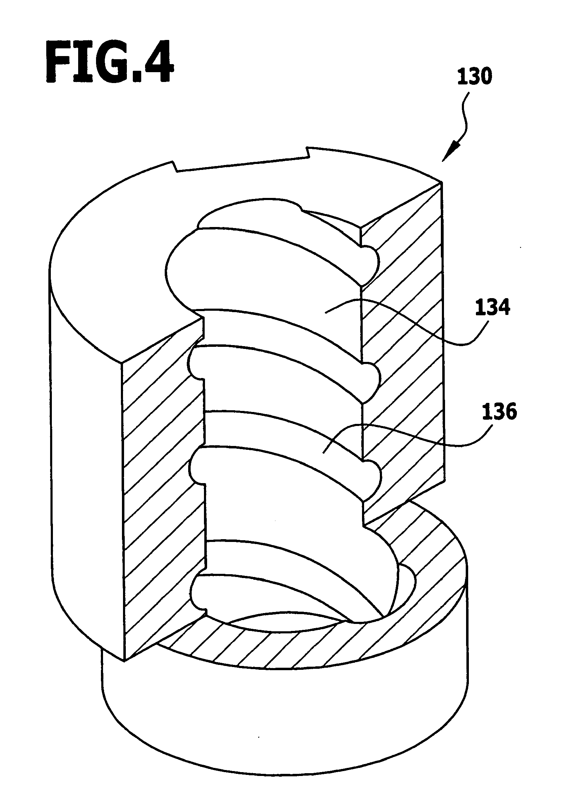

Die in den Fig. 3 und 4 im einzelnen dargestellte zylindrische Förderkammer 130 ist zur Unterstützung der Vorschubwirkung der Schnecke 108 an ihrer inneren Umfangswand 134 mit einer wendelförmigen Nut 136 versehen, welche sich in mehreren Gängen mit derselben Drehrichtung wie die Schnecke 108 um die Längsachse 138 der Förderkammer 130 herum erstreckt.

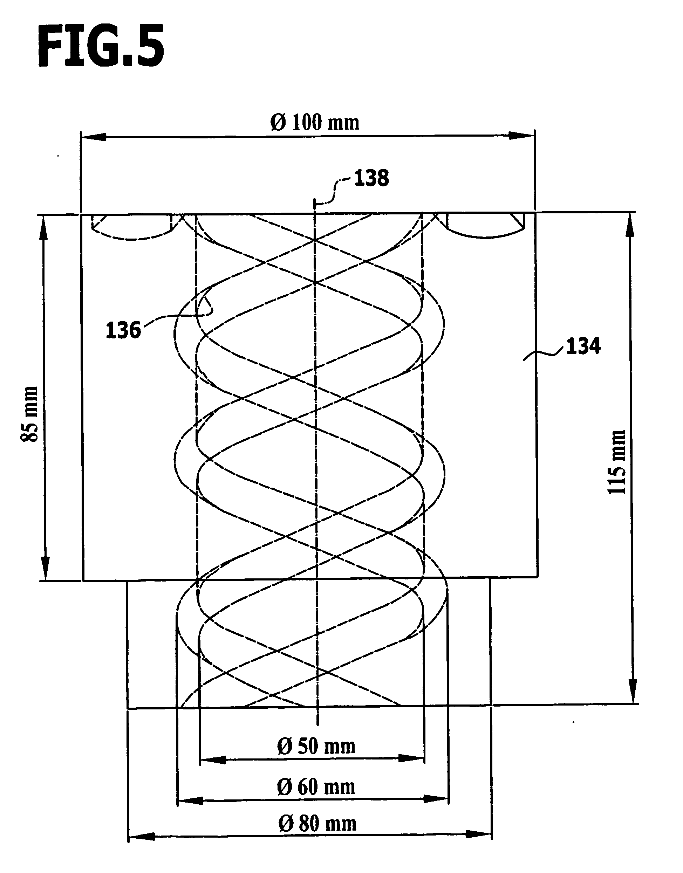

In der in Fig. 5 dargestellten Abwicklung der Umfangswand der Förderkammer 130 sind zwei solche Nuten 136 mit entgegengesetzter Drehrichtung gezeigt, welche in Abhängigkeit von der Drehrichtung der Schnecke 108 wahlweise vorgesehen sein können.

Alternativ hierzu kann auch eine Förderkammer mit einer glatten inneren Umfangswand verwendet werden.

Die vorverdichtete und partiell entlüftete Trockenmischung wird von den Walzen 104 zu den stückigen, bandförmigen Schülpen verpresst, welche anschließend in eine unterhalb der Verpressvorrichtung 102 angeordnete Siebmühle 116 gelangen.

Die in Fig. 3 im einzelnen dargestellte Siebmühle 116 umfasst ein gekrümmtes Reibeblech 118, das mit Löchern 119 mit Durchmessern im Bereich von ungefähr 1 mm bis ungefähr 6 mm versehen ist.

In dem vom Reibeblech 118 umgebenen Innenraum 120 der Siebmühle 116 dreht sich ein Rotor 122 mit beispielsweise fünf Flügeln 124 um eine horizontale Drehachse 126.

Der Rotor 122 wird mit einer Drehzahl im Bereich von ungefähr 60 U/min. bis ungefähr 400 U/min. betrieben.

Die mittels der Verpressvorrichtung 102 hergestellten Schülpen gelangen durch eine Eintrittsöffnung 128 in den Innenraum 120 der Siebmühle 116 und werden dort von dem Rotor 122 und dem Reibeblech 118 zu einem rieselfähigen Pulver zerrieben.

Dieses rieselfähige Pulver gelangt durch die Löcher in dem Reibeblech 118 aus der Siebmühle 116 heraus und wird in einem (nicht dargestellten) Auffangbehälter aufgefangen.

Aus dem Auffangbehälter wird das rieselfähige Pulver seiner weiteren Verwendung, beispielsweise zur Ramextrusion von Polymer-Werkstücken, zugeführt.

Im folgenden werden mehrere Beispiele eines mittels der vorstehend beschriebenen Vorrichtung 100 durchgeführten Verfahrens zum Herstellen eines rieselfähigen Pulvers eines Fluorpolymer-Compounds aus einer Trockenmischung beschrieben.

In allen diesen Beispielen wird als Verpressvorrichtung 102 der PHARMAPAKTOR L200/50 P der Firma Hosokawa Bepex GmbH, Daimlerstraße 8, 74211 Leingarten, Deutschland, verwendet.

Der Pharmapaktor ist mit Glattwalzen mit einer leichten Querriffelung ausgerüstet.

Die Vorverdichtung erfolgt mit einer zylindrisch/konischen Vorverdichterschnecke.

In den Kompaktortrichter sind zwei Längsstäbe eingeschweißt.

In die Innenseite der Kompaktorkammer können Nuten eingefräst sein, die wendelförmig um die Durchlaufrichtung der Trockenmischung verlaufen.

Die Breite b des Walzenspalts 107 beträgt in allen Beispielen 1 cm, die Länge I des Walzenspalts 107 jeweils 5 cm, so dass die Querschnittsfläche des Walzenspalts 107 jeweils 5 cm² beträgt.

Ferner wird in diesen Beispielen als Siebmühle die Siebmühle FC 200 der Firma Hosokawa Bepex GmbH, Daimlerstraße 8, 74211 Leingarten, Deutschland, verwendet.

### Beispiel 1

Als Trockenmischung wird eine Mischung aus 75 Gewichtsprozent fein gemahlenem PTFE-Pulver mit einer mittleren Partikelgröße d₅₀ von 25 µm und 25 Gewichtsprozent Glasfasern mit einem mittleren Faserdurchmesser von 13 µm und einer mittleren Faserlänge L₅₀ von 50 µm verwendet.

Das Schüttgewicht der verwendeten Trockenmischung beträgt 536 g/l.

Diese Trockenmischung wird mittels einer Schaufel in den Vorratstrichter 114 gegeben und mittels der Schnecke 108 in den Walzenspalt 107 gefördert.

Die Schnecke 108 weist die Schneckenparameter 60; 64/100 mm auf, was bedeutet, dass die Ganghöhe der Schnecke (Abstand von Wendel zu Wendel) 60 mm beträgt, dass der Außendurchmesser der Schnecke 108 in deren unterem zylindrischen Teil 64 mm beträgt und dass sich dieser Außendurchmesser im oberen konischen Teil der Schnecke 108 auf 100 mm erweitert.

Diese Schnecke 108 wird mit einer Schneckendrehzahl von 18 U/min., einem Schneckenlaststrom von 1,5 A und mit einer Durchsatzleistung von 111 kg/h betrieben.

Die Trockenmischung wird zwischen den Walzen 104 zu stückigen, bandförmigen Schülpen verpresst.

Die Walzen 104 werden mit einer spezifischen Anpresskraft von 4 kN/cm, einer Walzendrehzahl von 7,5 U/min. und einem Walzenlaststrom von 3,5 A betrieben.

Eine der verwendeten Walzen weist eine konkav gekrümmte Walzenmantelfläche auf; die andere der verwendeten Walzen weist eine glattzylindrische Walzenmantelfläche auf.

Die erhaltenen Schülpen werden in der Siebmühle 116 zu einem rieselfähigen Pulver mit einer mittleren Korngröße von d₅₀ von 700 µm und einem Schüttgewicht von ungefähr 800 g/l zermahlen.

Das erhaltene Pulver weist eine gute Rieselfähigkeit auf und lässt sich durch automatische Vorrichtungen leicht zur Weiterverarbeitung dosieren.

### Beispiel 2

Dieses Ausführungsbeispiel unterscheidet sich von dem Beispiel 1 lediglich dadurch, dass die spezifische Anpresskraft der Walzen auf 2-3 kN/cm erniedrigt und die Walzendrehzahl auf 8 U/min. erhöht wird.

Auch bei diesem Ausführungsbeispiel ergibt sich ein gut rieselfähiges Pulver.

### Beispiel 3

Dieses Ausführungsbeispiel unterscheidet sich von dem Beispiel 1 lediglich dadurch, dass die Schneckendrehzahl auf 35 U/min. erhöht wird, die spezifische Anpresskraft der Walzen auf 6 kN/cm erhöht wird und die Walzendrehzahl auf 8 U/min. erhöht wird.

Auch bei diesem Ausführungsbeispiel ergibt sich ein gut rieselfähiges Pulver.

### Beispiel 4

Dieses Ausführungsbeispiel unterscheidet sich von dem Beispiel 1 lediglich dadurch, dass eine doppelgängige Schnecke mit der Steigung 40 (also einer Ganghöhe von 40 mm) verwendet wird.

Auch bei diesem Ausführungsbeispiel ergibt sich ein gut rieselfähiges Pulver.

### Beispiel 5

Dieses Ausführungsbeispiel unterscheidet sich von dem Beispiel 1 lediglich dadurch, dass eine Schnecke mit den Schneckenparametern 40/48/90 mm verwendet wird, das heißt eine Schnecke mit einer Ganghöhe von 40 mm, deren Außendurchmesser im zylindrischen Teil 48 mm beträgt und sich im konischen Teil bis auf 90 mm erweitert.

Auch bei diesem Ausführungsbeispiel ergibt sich ein gut rieselfähiges Pulver.

### Beispiel 6

Dieses Ausführungsbeispiel unterscheidet sich von dem Beispiel 1 lediglich dadurch, dass als Trockenmischung eine Mischung aus 80 Gewichtsprozent fein gemahlenem PTFE-Pulver mit einer mittleren Partikelgröße d₅₀ von 25 µm, 15 Gewichtsprozent Glasfasern mit einem mittleren Faserdurchmesser von 13 µm und einer mittleren Faserlänge L₅₀ von 50 µm und 5 Gewichtsprozent Graphit vom Typ Grafit V 1032 verwendet wird. Diese Trockenmischung weist ein Schüttgewicht von 540 g/l auf.

Die in diesem Ausführungsbeispiel verwendete Schnecke weist die Schneckenparameter 60/66/120 mm auf, also eine Ganghöhe von 60 mm und einen Außendurchmesser, der im zylindrischen Teil 66 mm beträgt und sich im konischen Teil auf 120 mm erweitert.

Die Walzen 104 werden mit einer spezifischen Anpresskraft von ungefähr 2 kN/cm und mit einer Walzendrehzahl von 7,5 U/min. betrieben.

Auch bei diesem Ausführungsbeispiel wird ein gut rieselfähiges Pulver erhalten.

### Beispiel 7

Dieses Ausführungsbeispiel unterscheidet sich von dem Beispiel 1 dadurch, dass als Trockenmischung eine Mischung aus 80 Gewichtsprozent fein gemahlenem PTFE-Pulver mit einer mittleren Partikelgröße d₅₀ von 25 µm, 15 Gewichtsprozent Glasfasern mit einem mittleren Faserdurchmesser von 13 µm und einer mittleren Faserlänge L₅₀ von 50 µm und 5 Gewichtsprozent Graphit vom Typ Grafit V 1032 verwendet wird. Diese Trockenmischung weist ein Schüttgewicht von 540 g/l auf.

Die in diesem Ausführungsbeispiel verwendete Schnecke weist die Schneckenparameter 60/66/120 mm auf, also eine Ganghöhe von 60 mm und einen Außendurchmesser, der im zylindrischen Teil 66 mm beträgt und sich im konischen Teil auf 120 mm erweitert.

Die verwendeten Walzen sind mit einem Wellprofil von 6 mm, seitlich offen, versehen.

Diese Walzen werden mit einer spezifischen Anpresskraft von ungefähr 2 kN/cm betrieben.

Auch bei diesem Ausführungsbeispiel wird ein gut rieselfähiges Pulver erhalten.

### Beispiel 8

Dieses Ausführungsbeispiel unterscheidet sich von dem Beispiel 7 lediglich dadurch, dass die spezifische Anpresskraft der Walzen auf 4-5 kN/cm erhöht und die Walzendrehzahl auf 4,5 U/min. verringert wird.

Die Schnecke 108 zur Förderung der Trockenmischung in den Walzenspalt 107 entfällt bei diesem Ausführungsbeispiel; vielmehr wird die Trockenmischung bei diesem Ausführungsbeispiel lediglich durch die Wirkung der Schwerkraft in den Walzenspalt 107 gefördert.

Auch bei diesem Ausführungsbeispiel wird ein gut rieselfähiges Pulver erhalten.

### Beispiel 9

Dieses Ausführungsbeispiel unterscheidet sich von dem Beispiel 8 lediglich dadurch, dass die spezifische Anpresskraft der Walzen auf 2-4 kN/cm verringert und die Walzendrehzahl auf 16 U/min. erhöht wird.

Auch bei diesem Ausführungsbeispiel wird ein gut rieselfähiges Pulver erhalten.

### Beispiel 10

Dieses Ausführungsbeispiel unterscheidet sich von dem Beispiel 1 dadurch, dass als Trockenmischung eine Mischung aus 75 Gewichtsprozent fein gemahlenem PTFE-Pulver mit einer mittleren Partikelgröße d₅₀ von 25 µm und 25 Gewichtsprozent Kohle verwendet wird. Diese Trockenmischung weist ein Schüttgewicht von 495 g/l auf.

Die in diesem Ausführungsbeispiel verwendete Schnecke weist eine Ganghöhe von 60 mm auf und einen Außendurchmesser, der im zylindrischen Teil 64 mm beträgt und sich im konischen Teil auf 100 mm erweitert.

Die Walzen werden mit einer spezifischen Anpresskraft von ungefähr 3 kN/cm und mit einer Walzendrehzahl von 6 U/min. bei einem Walzenlaststrom von 3,5 A betrieben.

Die Schnecke wird mit einer Schneckendrehzahl von 18 U/min, einem Schneckenlaststrom von 1,3 A und mit einer Durchsatzleistung von 160 kg/h betrieben.

Die verwendete Förderkammer weist eine wendelförmige Nut auf.

Auch bei diesem Ausführungsbeispiel wird ein gut rieselfähiges Pulver erhalten.

### Beispiel 11

Dieses Ausführungsbeispiel unterscheidet sich von dem Beispiel 10 dadurch, dass als Trockenmischung eine Mischung aus 90 Gewichtsprozent fein gemahlenem PTFE-Pulver mit einer mittleren Partikelgröße d₅₀ von 25 µm und 10 Gewichtsprozent Kohle verwendet wird. Diese Trockenmischung weist ein Schüttgewicht von 450 g/l auf.

Die Walzen werden mit einer spezifischen Anpresskraft von 2 kN/cm, einer Walzendrehzahl von 6 U/min. und einem Walzenlaststrom von 3,0 A betrieben.

Die Schnecke, welche dieselben Parameter wie beim Beispiel 10 aufweist, wird mit einer Schneckendrehzahl von 18 U/min. bei einem Schneckenlaststrom von 1,2 A und einer Durchsatzleistung von 140 kg/h betrieben.

Auch bei diesem Ausführungsbeispiel wird ein gut rieselfähiges Pulver erhalten.

### Beispiel 12

Dieses Ausführungsbeispiel unterscheidet sich von dem Beispiel 10 dadurch, dass als Trockenmischung eine Mischung aus 40 Gewichtsprozent fein gemahlenem PTFE-Pulver mit einer mittleren Partikelgröße d₅₀ von 25 µm und 60 Gewichtsprozent Bronze verwendet wird. Diese Trockenmischung weist ein Schüttgewicht von 1.200 g/l auf.

Die Walzen werden mit einer spezifischen Anpresskraft von 4 kN/cm, einer Walzendrehzahl von 6 U/min. und einem Walzenlaststrom von 4,0 A betrieben.

Die verwendete Schnecke weist dieselben Parameter auf wie im Beispiel 10 und wird mit einer Schneckendrehzahl von 18 U/min. bei einem Schneckenlaststrom von 1,5 A und einer Durchsatzleistung von 190 kg/h betrieben.

Auch bei diesem Ausführungsbeispiel ergibt sich ein gut rieselfähiges Pulver.

## Patentansprüche

1. Trockengranulierungsverfahren zum Herstellen eines rieselfähigen Pulvers eines Fluorpolymer-Compounds aus einer Trockenmischung, welche mindestens ein Fluorpolymer-Material und mindestens einen Füllstoffenthäit, umfassend folgende Verfahrensschritte:
- Verpressen der Trockenmischung zu Schülpen;
- Zerkleinern der Schülpen zu dem rieselfähigen Pulver;
**dadurch gekennzeichnet,**
**dass** die Trockenmischung als Fluorpolymer-Material Polytetrafluorethylen (PTFE) oder modifiziertes Polytetrafluorethylen enthält.

2. Trockengranulierungsverfahren nach Anspruch 1, **dadurch gekennzeichnet, dass** die Trockenmischung einen Füllstoffanteil von höchstens 60 Gewichtsprozent aufweist.

3. Trockengranulierungsverfahren nach einem der Ansprüche 1 oder 2, **dadurch gekennzeichnet, dass** die Trockenmischung als Füllstoff einen organischen Füllstoff, insbesondere PEEK, ein Polyimid, einen aromatischen Polyester, PPS und/oder PPSO2, und/oder einen anorganischen Füllstoff, insbesondere Glaspulver, Glasfasern, Bronze, Kohlenstoff, Graphit, SiO₂ Al₂O₃ und/oder MoS₂, und/oder eine Mischung aus mehreren organischen Füllstoffen, eine Mischung aus mehreren anorganischen Füllstoffen und/oder eine Mischung aus mindestens einem organischen Füllstoff und mindestens einem anorganischen Füllstoff enthält.

4. Trockengranulierungsverfahren nach einem der Ansprüche 1 bis 3, **dadurch gekennzeichnet, dass** die Trockenmischung ein Schüttgewicht von 100 g/l bis 1.600 g/l aufweist.

5. Trockengranulierungsverfahren nach einem der Ansprüche 1 bis 4, **dadurch gekennzeichnet, dass** das rieselfähige Pulver ein Schüttgewicht von 400 g/l bis 2.500 g/l aufweist.

6. Trockengranulierungsverfahren nach einem der Ansprüche 1 bis 5, **dadurch gekennzeichnet, dass** das rieselfähige Pulver ein höheres Schüttgewicht aufweist als die Trockenmischung.

7. Trockengranulierungsverfahren nach einem der Ansprüche 1 bis 6, **dadurch gekennzeichnet, dass** das Fluorpolymer-Material in der Trockenmischung eine mittlere Korngröße d₅₀ von 5 µm bis 100 µm aufweist.

8. Trockengranulierungsverfahren nach einem der Ansprüche 1 bis 7, **dadurch gekennzeichnet, dass** das rieselfähige Pulver eine mittlere Korngröße d₅₀ von 300 µm bis 2.500 µm aufweist.

9. Trockengranulierungsverfahren nach einem der Ansprüche 1 bis 8, **dadurch gekennzeichnet, dass** das rieselfähige Pulver eine höhere mittlere Korngröße d₅₀ aufweist als das Fluorpolymer-Material in der Trockenmischung.

10. Trockengranulierungsverfahren nach einem der Ansprüche 1 bis 9, **dadurch gekennzeichnet, dass** die Trockenmischung mittels einer Schnecke (108) zu einer Verpressvorrichtung (102) gefördert wird.

11. Trockengranulierungsverfahren nach Anspruch 10, **dadurch gekennzeichnet, dass** die Verpressvorrichtung (102) zwei einander gegenüberliegende Walzen (104) aufweist und die Schnecke (108) bis in den Zwickelbereich zwischen den einander gegenüberliegenden Walzen (104) hineinreicht.

12. Trockengranulierungsverfahren nach einem der Ansprüche 10 oder 11, **dadurch gekennzeichnet, dass** die Schnecke (108) eine im Wesentlichen vertikale Drehachse (110) aufweist.

13. Trockengranulierungsverfahren nach einem der Ansprüche 10 bis 12, **dadurch gekennzeichnet, dass** die Schnecke (108) mit einer Drehzahl von 10 U/min. bis 100 U/min. betrieben wird.

14. Trockengranulierungsverfahren nach einem der Ansprüche 10 bis 13, **dadurch gekennzeichnet, dass** die Schnecke (108) eine längs der Förderrichtung (112) der Schnecke (108) abnehmende Steigung aufweist.

15. Trockengranulierungsverfahren nach einem der Ansprüche 10 bis 14, **dadurch gekennzeichnet, dass** die Schnecke (108) einen längs der Förderrichtung (112) der Schnecke (108) abnehmenden Durchmesser aufweist.

16. Trockengranulierungsverfahren nach einem der Ansprüche 10 bis 15, **dadurch gekennzeichnet, dass** die Schnecke (108) in einer Förderkammer angeordnet ist, welche mindestens eine wendelförmig um die Förderrichtung (112) der Schnecke (108) verlaufende Nut aufweist.

17. Trockengranulierungsverfahren nach einem der Ansprüche 1 bis 16, **dadurch gekennzeichnet, dass** die Trockenmischung vor dem Verpressen vorverdichtet wird.

18. Trockengranulierungsverfahren nach einem der Ansprüche 1 bis 17, **dadurch gekennzeichnet, dass** die Trockenmischung vor dem Verpressen zumindest teilweise entlüftet wird.

19. Trockengranulierungsverfahren nach einem der Ansprüche 1 bis 18, **dadurch gekennzeichnet, dass** die Trockenmischung mittels mindestens einer Walze (104) zu den Schülpen verpresst wird.

20. Trockengranulierungsverfahren nach Anspruch 19, **dadurch gekennzeichnet, dass** die Walze (104) mit einer spezifischen Anpresskraft von 1 kN/cm bis 10 kN/cm betrieben wird.

21. Trockengranulierungsverfahren nach einem der Ansprüche 19 oder 20, **dadurch gekennzeichnet, dass** die Walze (104) mit einer Drehzahl von 5 U/min. bis 15 U/min. betrieben wird.

22. Trockengranulierungsverfahren nach einem der Ansprüche 19 bis 21, **dadurch gekennzeichnet, dass** die Walze (104) mit einer profilierten Walzenmantelfläche versehen ist.

23. Trockengranulierungsverfahren nach einem der Ansprüche 1 bis 22, **dadurch gekennzeichnet, dass** die spezifische Dichte der durch Verpressen der Trockenmischung hergestellten Schülpen von 1,3 g/cm³ bis 4,0 g/cm³ beträgt.

24. Trockengranulierungsverfahren nach einem der Ansprüche 1 bis 23, **dadurch gekennzeichnet, dass** die Schülpen mittels einer Mühle zerkleinert werden.

25. Trockengranulierungsverfahren nach Anspruch 24, **dadurch gekennzeichnet, dass** die Schülpen mittels einer Siebmühle (116) zerkleinert werden.

26. Trockengranulierungsverfahren nach einem der Ansprüche 24 oder 25, **dadurch gekennzeichnet, dass** die Mühle mit einer Drehzahl von 60 U/min. bis 400 U/min. betrieben wird.

27. Rieselfähiges Pulver eines Fluorpolymer-Compounds, das durch ein Trockengranulierungsverfahren nach einem der Ansprüche 1 bis 26 hergestellt ist.

28. Verwendung eines rieselfähigen Pulvers nach Anspruch 27 zur Herstellung von Polymer-Werkstücken mittels Ramextrusion.

## Claims

1. Dry granulation method for the production of a flowable powder of a fluoropolymer compound from a dry mixture, which contains at least one fluoropolymer material and at least one filler, comprising the following method steps:
● pressing the dry mixture into lumps;
● crushing the lumps to form the flowable powder,
**characterised in that**
the dry mixture contains polytetrafluoroethylene (PTFE) or modified polytetrafluoroethylene as fluoropolymer material.

2. Dry granulation method according to Claim 1, **characterised in that** the dry mixture has a filler content of 60 % by weight at maximum.

3. Dry granulation method according to Claim 1 or 2, **characterised in that** as filler the dry mixture contains an organic filler, in particular PEEK, a polyimide, an aromatic polyester, PPS and/or PPSO2, and/or an inorganic filler, in particular glass powder, glass fibres, bronze, carbon, graphite, SiO₂, Al₂O₃ and/or MoS₂, and/or a mixture of a plurality of organic fillers, a mixture of a plurality of inorganic fillers and/or a mixture of at least one organic filler and at least one inorganic filler.

4. Dry granulation method according to any of Claims 1 to 3, **characterised in that** the dry mixture has a bulk density of 100 g/l to 1 600 g/l.

5. Dry granulation method according to any of Claims 1 to 4, **characterised in that** the flowable powder has a bulk density of 400 g/l to 2 500 g/l.

6. Dry granulation method according to any of Claims 1 to 5, **characterised in that** the flowable powder has a higher bulk density than the dry mixture.

7. Dry granulation method according to any of Claims 1 to 6, **characterised in that** the fluoropolymer material in the dry mixture has an average grain size d₅₀ of 5 µm to 100 µm.

8. Dry granulation method according to any of Claims 1 to 7, **characterised in that** the flowable powder has an average grain size d₅₀ of 300 µm to 2 500 µm.

9. Dry granulation method according to any of Claims 1 to 8, **characterised in that** the flowable powder has a higher average grain size d₅₀ than the fluoropolymer material in the dry mixture.

10. Dry granulation method according to any of Claims 1 to 9, **characterised in that** the dry mixture is conveyed by means of a worm device (108) to a pressing device (102).

11. Dry granulation method according to Claim 10, **characterised in that** wherein the pressing device (102) has two opposing rollers (104) and the worm device (108) extends into the wedge-like region between the opposing rollers (104).

12. Dry granulation method according to Claim 10 or 11, **characterised in that** the worm device (108) has a substantially vertical rotational axis (110).

13. Dry granulation method according to any of Claims 10 to 12, **characterised in that** the worm device (108) is operated at a speed of 10 rpm to 100 rpm.

14. Dry granulation method according to any of Claims 10 to 13, **characterised in that** the worm device (108) has a pitch that decreases in the transport direction (112) of the worm device (108).

15. Dry granulation method according to any of Claims 10 to 14, **characterised in that** the worm device (108) has a diameter that decreases in the transport direction (112) of the worm device (108).

16. Dry granulation method according to any of Claims 10 to 15, **characterised in that** the worm device (108) is arranged in a transport chamber, which has at least one groove running in a spiral shape around the transport direction (112) of the worm device (108).

17. Dry granulation method according to any of Claims 1 to 16, **characterised in that** the dry mixture is pre-compacted before the pressing.

18. Dry granulation method according to any of Claims 1 to 17, **characterised in that** the dry mixture is at least partially deaerated before the pressing.

19. Dry granulation method according to any of Claims 1 to 18, **characterised in that** the dry mixture is pressed to form the lumps by means of at least one roller (104).

20. Dry granulation method according to Claim 19, **characterised in that** the roller (104) is operated with a specific contact force of 1 kN/cm to 10 kN/cm.

21. Dry granulation method according to Claim 19 or 20, **characterised in that** the roller (104) is operated at a speed of 5 rpm to 15 rpm.

22. Dry granulation method according to any of Claims 19 to 21, **characterised in that** the roller (104) is provided with a profiled rolling surface.

23. Dry granulation method according to any of Claims 1 to 22, **characterised in that** the relative density of the lumps produced by pressing the dry mixture amounts to 1.3 g/cm³ to 4.0 g/cm³.

24. Dry granulation method according to any of Claims 1 to 23, **characterised in that** the lumps are crushed by means of a mill.

25. Dry granulation method according to Claim 24, **characterised in that** the lumps are crushed by means of a screen-type mill (116).

26. Dry granulation method according to Claim 24 or 25, **characterised in that** the mill is operated at a speed of 60 rpm to 400 rpm.

27. Flowable powder of a fluoropolymer compound, which is produced by a dry granulation method according to any of Claims 1 to 26.

28. Use of a flowable powder according to Claim 27 for the production of polymer workpieces by means of ram extrusion.

## Revendications

1. Procédé de granulation à sec pour fabriquer une poudre fluide d'un composé de fluoropolymère à partir d'un mélange sec, qui contient au moins un matériau de fluoropolymère et au moins une matière de charge, comprenant les étapes suivantes:
(i) presser le mélange sec en flocons ;
(ii) broyer les flocons en la poudre fluide :
**caractérisé en ce que** le mélange sec contient comme matériau de fluoropolymère du polytétrafluoroéthylène (PTFE) ou du polytétrafluoroéthylène modifié.

2. Procédé de granulation à sec selon la revendication 1, **caractérisé en ce que** le mélange sec présente une proportion de matière de charge de 60 pour cent en poids au maximum.

3. Procédé de granulation à sec selon l'une des revendications 1 ou 2, **caractérisé en ce que** le mélange sec contient comme matière de charge une matière de charge organique, en particulier du PEEK, un polyimide, un polyester aromatique, du PPS et/ou du PPSO2, et/ou une matière de charge inorganique, en particulier de la poudre de verre, des fibres de verre, du bronze, du carbone, du graphite, du SiO₂ du Al₂O₃ et/ou MoS₂, et/ou un mélange de plusieurs matières de charge organiques, un mélange de plusieurs matières de charge inorganiques et/ou un mélange d'au moins une matière de charge organique et au moins une matière de charge inorganique.

4. Procédé de granulation à sec selon l'une des revendications 1 à 3, **caractérisé en ce que** le mélange sec présente une densité apparente de 100 g/l à 1600 g/l.

5. Procédé de granulation à sec selon l'une des revendications 1 à 4, **caractérisé en ce que** la poudre fluide présente une densité apparente de 400 g/l à 2500 g/l.

6. Procédé de granulation à sec selon l'une des revendications 1 à 5, **caractérisé en ce que** la poudre fluide présente une densité apparente plus élevée que le mélange sec.

7. Procédé de granulation à sec selon l'une des revendications 1 à 6, **caractérisé en ce que** le matériau de fluoropolymère dans le mélange sec présente une taille de grain moyenne d₅₀ de 5 µm à 100 µm.

8. Procédé de granulation à sec selon l'une des revendications 1 à 7, **caractérisé en ce que** la poudre fluide présente une taille de grain moyenne d₅₀ de 300 µm à 2500 µm.

9. Procédé de granulation à sec selon l'une des revendications 1 à 8, **caractérisé en ce que** la poudre fluide présente une taille de grain moyenne d₅₀ plus élevée que le matériau de fluoropolymère dans le mélange sec.

10. Procédé de granulation à sec selon l'une des revendications 1 à 9, **caractérisé en ce que** le mélange sec est transporté au moyen d'une vis sans fin (108) jusqu'à un dispositif de pressage (102).

11. Procédé de granulation à sec selon la revendication 10, **caractérisé en ce que** le dispositif de pressage (102) comporte deux rouleaux opposés l'un à l'autre (104) et la vis sans fin (108) pénètre jusque dans la région d'angle rentrant entre les rouleaux opposés l'un à l'autre (104).

12. Procédé de granulation à sec selon l'une des revendications 10 ou 11, **caractérisé en ce que** la vis sans fin (108) présente un axe de rotation essentiellement vertical (110).

13. Procédé de granulation à sec selon l'une des revendications 10 à 12, **caractérisé en ce que** la vis sans fin (108) est conduite avec une vitesse de rotation de 10 tr/min à 100 tr/min.

14. Procédé de granulation à sec selon l'une des revendications 10 à 13, **caractérisé en ce que** la vis sans fin (108) présente un pas décroissant le long de la direction de transport (112) de la vis sans fin (108).

15. Procédé de granulation à sec selon l'une des revendications 10 à 14, **caractérisé en ce que** la vis sans fin (108) présente un diamètre décroissant le long de la direction de transport (112) de la vis sans fin (108).

16. Procédé de granulation à sec selon l'une des revendications 10 à 15, **caractérisé en ce que** la vis sans fin (108) est disposée dans une chambre de transport, qui présente au moins une rainure qui s'étend en hélice autour de la direction de transport (112) de la vis sans fin (108).

17. Procédé de granulation à sec selon l'une des revendications 1 à 16, **caractérisé en ce que** le mélange sec est pré-comprimé avant le pressage.

18. Procédé de granulation à sec selon l'une des revendications 1 à 17, **caractérisé en ce que** le mélange sec est au moins partiellement désaéré avant le pressage.

19. Procédé de granulation à sec selon l'une des revendications 1 à 18, **caractérisé en ce que** le mélange sec est pressé en flocons au moyen d'au moins un rouleau (104).

20. Procédé de granulation à sec selon la revendication 19, **caractérisé en ce que** le rouleau (104) est conduit avec une force de pression spécifique de 1 kN/cm à 10 kN/cm.

21. Procédé de granulation à sec selon l'une des revendications 19 ou 20, **caractérisé en ce que** le rouleau (104) est conduit avec une vitesse de rotation de 5 tr/min à 15 tr/min.

22. Procédé de granulation à sec selon l'une des revendications 19 à 21, **caractérisé en ce que** le rouleau (104) est doté d'une surface latérale de rouleau profilée.

23. Procédé de granulation à sec selon l'une des revendications 1 à 22, **caractérisé en ce que** la densité spécifique des flocons fabriqués par pressage du mélange sec vaut de 1,3 g/cm³ à 4,0 g/cm³.

24. Procédé de granulation à sec selon l'une des revendications 1 à 23, **caractérisé en ce que** les flocons sont broyés au moyen d'un broyeur.

25. Procédé de granulation à sec selon la revendication 24, **caractérisé en ce que** les flocons sont broyés au moyen d'un broyeur à tamis (116).

26. Procédé de granulation à sec selon l'une des revendications 24 ou 25, **caractérisé en ce que** le broyeur est conduit avec une vitesse de rotation de 60 tr/min à 400 tr/min.

27. Poudre fluide d'un composé de fluoropolymère, qui a été fabriquée par un procédé de granulation à sec selon l'une quelconque des revendications 1 à 26.

28. Utilisation d'une poudre fluide selon la revendication 27 pour la fabrication de pièces de polymère par extrusion au bélier.
